# EUROPÄISCHE PATENTSCHRIFT

(11) **EP 1 892 094 B1**
(45) Veröffentlichungstag und Bekanntmachung des Hinweises auf die Patenterteilung: **04.04.2012**
(21) Anmeldenummer: 07016400.9
(22) Anmeldetag: 22.08.2007
(51) Int. Cl.: B32B 27/32, C08J 3/28, C08L 53/02, C08L 9/00, C08L 51/04

(54) **Elastische Folie, insbesondere Hygieneartikel**
Elastic film, in particular sanitary articles
Feuille élastique, en particulier article hygiénique

(30) Priorität: 26.08.2006 DE 102006040181
(43) Veröffentlichungstag der Anmeldung: 27.02.2008
(73) Patentinhaber: Nordenia Technologies GmbH, 48599 Gronau (DE)
(72) Erfinder: Hach, Maik, Mount Orab, OH 45154 (US)
(74) Vertreter: Albrecht, Rainer Harald

(56) Entgegenhaltungen:
- WO-A-00/17675
- US-A1- 2004 049 836
- US-A1- 2006 083 900

## Beschreibung

Die Erfindung betrifft eine Folie, insbesondere für Hygieneartikel, mit mindestens einer durch Extrusion einer elastomeren Polymerzusammensetzung hergestellten und anschließend vernetzten Schicht, wobei die elastomere Polymerzusammensetzung 40 bis 90 Gew.-Anteile eines Styrol-Block-Copolymers, 5 bis 50 Gew.-Anteile eines Weichmacheröls und bis zu 10 Gew.-Anteile eines thermoplastischen Polymers enthält und wobei die durch Extrusion der elastomeren Polymerzusammensetzung gebildete Schicht durch Behandlung mit Elektronenstrahlen vernetzt ist.

Eine elastische Folie mit den beschriebenen Merkmalen ist aus EP 1 228 144 B1 bekannt. Die thermoplastischen Polymere der elastomeren Polymerzusammensetzung bestehen aus Polymeren, die entweder mit Hartsegmenten oder mit Weichsegmenten des Styrol-Block-Copolymers verträglich sind. Die thermoplastischen Polymere fördern eine dreidimensionale Vernetzung bei der nachfolgenden Elektronenstrahlbehandlung. Es besteht jedoch ein Bedürfnis, den Vernetzungsgrad und damit auch die physikalischen Eigenschaften der elastischen Folie noch weiter zu verbessern. Anzustreben ist eine elastische Folie, die große Kräfte aufnehmen kann und sich durch eine geringe Kriechneigung auszeichnet.

Aus WO 2004/005398 A1 ist eine elastische Folie bekannt, die eine thermoplastische Deckschicht und eine Elastomerschicht aus UV-vernetzbarem Material aufweist. Um eine Vernetzung durch UV-Strahlen zu ermöglichen, muss die Polymerzusammensetzung der Elastomerschicht als Photoinitiator wirkende Substanzen mit einem Anteil von bis zu 60 Gew.-% enthalten. Bei der Bestrahlung der Photoinitiatoren werden freie Radikale erzeugt, die Wasserstoff bzw. Wasserstoffionen aus den Polymerketten der Elastomerschicht entfernen. Verschiedene Polymerketten können sich an den Bruchstellen verbinden, wodurch die Elastomerschicht vernetzt wird und sich die elastischen und mechanischen Eigenschaften verbessern. Allerdings können bei dem Zerfall der Photoinitiatoren unter UV-Bestrahlung physiologisch bedenkliche niedermolekulare Bestandteile erzeugt werden, die aus der Folie ausmigrieren. Häufig tritt auch ein unerwünschter Geruch auf, der auf die Photoinitiatoren bzw. deren Bruchstücke zurückzuführen ist. Unter fertigungstechnischen Gesichtspunkten ist nachteilig, dass bei der Verwendung eines Photoinitiators durch natürliche UV-Einstrahlung bereits eine Teilvernetzung des für die Extrusion bereit gehaltenen Polymermaterials erfolgen kann, wodurch die Extrusion wesentlich erschwert oder unmöglich gemacht wird. UV-Strahlungsquellen haben des Weiteren einen hohen Energiebedarf und sind bei einer Massenproduktion fehleranfällig.

Aus US 2006/0083900 A1 ist ein Verfahren zur Herstellung eines dehnbaren Lamiantes mit einer elastischen Folie und einer Deckschicht bekannt, wobei die elastische Folie beispielsweise 55 Gew.-% eines Styrol-Block-Copolymers, 40 Gew.-% eines mineralischen Öls sowie 5 Gew.-% eines Makro-Photoinitiators aufweisen kann.

Aus US 2004/0049836 A1 ist ein durch UV-Strahlung vernetzbares Elastomermaterial bekannt, welches verbesserte elastische und mechanische Eigenschaft aufweist. Zur Vernetzung sind Marko-Photoinitiatoren vorgesehen, die ein mittleres Molgewicht zwischen 5.000 und 30.000 kg/kmol, vorzugsweise 10.000 bis 200.000 kg/kmol, besonders bevorzugt zwischen 25.000 und 150.000 kg/kmol aufweisen. Die Photoinitiatoren weisen aromatische Bestandteile auf, wobei angrenzend an die aromatischen Bestandteile schwache, durch UV-Licht leicht auftrennbare Bindungen vorliegen.

Die WO 00/17675 A1 betrifft eine Materialzusammenstellung, die bei einem Spritzgießen während der Polymerisation eine Vernetzungsreaktion durchführt und nur eine geringe Schrumpfneigung aufweist. Unmittelbar in der Spritzgießform wird eine die Vernetzung auslösende Polymerisationsenergie in Form von UV-Licht oder Temperatur zugeführt.

Vor diesem Hintergrund liegt der Erfindung die Aufgabe zugrunde, eine elastische Folie anzugeben, die als Folge einer hohen Vernetzungsdichte eine hohe Zugfestigkeit aufweist und deren elastische Eigenschaften sich bei einer Dauerbeanspruchung nicht ändern.

Ausgehend von einer elastischen Folie mit den eingangs beschriebenen Merkmalen wird die Aufgabe erfindungsgemäß dadurch gelöst, dass die elastomere Polymerzusammensetzung zusätzlich 2 bis 20 Gew.-Anteile eines reaktiven Weichmachers enthält, der aus einem methacrylatterminierten Butadien, Methacrylat-Butadien, einem multifunktionellen Polyester-Acrylat oder Acrylat-Polybutadien besteht und eine Molmasse von weniger als 10.000 kg/kmol aufweist, mit Weichsegmenten des Styrol-Block-Copolymers kompatibel ist. Der erfindungsgemäß eingesetzte reaktive Weichmacher ist eine viskose Flüssigkeit und kein festes thermoplastisches Polymer. Es liegen Oligomere vor, d. h. Makromoleküle im Übergangsbereich zwischen niedermolekularen Produkten und festen Polymeren mit einer Molmasse zwischen etwa 10² und 10⁴ kg/kmol. Der reaktive Weichmacher besitzt eine chemische Basisstruktur, die kompatibel zu dem Weichsegment des Stirol-Block-Copolymers ist. Er lässt sich sehr gut in die Styrol-Block-Copolymermatrix einarbeiten, wobei das geringe Molekulargewicht die Mischbarkeit der reaktiven Weichmacher in der Polymermatrix begünstigt. Durch zusätzliche Acrylatgruppen kann die Vernetzungsdichte angehoben werden.

Thermoplastische Elastomere bestehen in ihrer Molekülstruktur aus Hart- und Weichsegmenten, wobei zwischen den Hartsegmenten benachbarter Polymerketten durch zwischenmolekulare Kräfte physikalische Verknüpfungsstellen erzeugt werden und wobei die Weichsegmente aufgrund ihrer beweglichen Struktur eine reversible Dehnung ermöglichen. Die physikalischen Verknüpfungsstellen verhindern dabei bis zu einer bestimmten Temperatur bzw. bis zum Erreichen einer Dehngrenze ein Abgleiten benachbarter Molekülketten und damit eine irreversible Dehnung der Folie. Durch eine Elektronenstrahlvernetzung entstehen dauerhafte Bindungen zwischen den Molekülketten. Es bildet sich ein Netzwerk, wodurch eine höhere thermische und chemische Beständigkeit erreicht wird. Insbesondere können durch die zusätzlichen, starken Bindungen dauerhaft größere Kräfte aufgenommen werden. So kann die Neigung zum Reißen und/oder zur Lochbildung reduziert werden.

Durch den erfindungsgemäßen Zusatz des beschriebenen reaktiven Weichmachers kann eine höhere Vernetzungsdichte im Zuge der Elektronenstrahlvernetzung realisiert werden. Die höhere Vernetzungsdichte ergibt ein engmaschigeres dreidimensionales Polymernetzwerk und gewährleistet auch, dass der reaktive Weichmacher nicht aus der Styrol-Block-Copolymermatrix aus diffundieren kann und keine unerwünschten Hautreaktionen hervorrufen können.

Als reaktiver Weichmacher eignen sich insbesondere methacrylat-therminiertes Butadien, multifuktionelles Polyesteracrylat und Acrylat-Polybutadien, auch High-Vinyl-Butadien genannt. Der reaktive Weichmacher weist eine Viskosität von weniger als 10⁵ mPas, gemessen mit einem Brookfield Viskosimeter bei 25° C, auf. Erfindungsgemäß bevorzugt ist ein niedrigviskoses Oligomer, insbesondere multifunktionelle Polyester-Acrylate, die auch als hyperbranched Acrylate bezeichnet werden. Die mit "hyperbranched" reaktiven Weichmacher vernetzten Folien zeichnen sich durch besonders gute Festigkeitswerte aus.

Die erfindungsgemäßen Folien sind für eine starke Beanspruchung, beispielsweise als Verschlusselemente einer Windel, geeignet. Die Dicke der elastischen Schicht einer beispielsweise für Windelverschlüsse geeigneten Folie liegt zwischen 20 µm und 150 µm, vorzugsweise zwischen 40 µm und 80 µm.

Als Weichmacheröle kommen sogenannte Weißöle zur Anwendung, die für medizinische Anwendungen zugelassen sind. Hierbei handelt es sich vorzugsweise um aliphatische Kohlenstoffverbindungen mit sehr hohem Reinheitsgrad. Die Polymerzusammensetzung kann bis zu 10 Gew.-Anteile eines thermoplastischen Polymers enthalten. Als thermoplastische Polymere sind Polymere aus der Gruppe der Polystyrole, Ethylen-Vinylacetat-Copolymere oder Polyolefine einsetzbar, um die Folieneigenschaften zu modifizieren.

Die elastische Folie kann als Monofolie extrudiert oder mehrlagig coextrudiert sein, wobei bei einer bevorzugten Ausführung der Erfindung vorgesehen ist, dass die Folie mindestens eine mit der elastomeren Polymerzusammensetzung coextrudierte Außenschicht aus einem Polymer der Gruppe Polyethylen, Polyethylen-Copolymer, Polypropylen, Polypropylen-Copolymer oder einer Mischung dieser Polymere aufweist. Durch die Anordnung einer polyolefinischen Schicht an zumindest einer Seite der elastischen Schicht kann die Folie bei der weiteren Verarbeitung beispielsweise durch Siegeln oder Kleben leicht mit angrenzenden Folien- oder Nonwovenschichten verbunden oder laminiert werden. Des Weiteren wird durch die Anordnung einer polyolefinschen Außenschicht eine Verblockung der Folie beim Aufrollen weitgehend vermieden. Die polyolefinische Außenschicht ist vorzugsweise dünn im Vergleich zu der elastischen Schicht.

Die vorteilhaften mechanischen Eigenschaften der erfindungsgemäßen Folie äußern sich nicht zuletzt auch darin, dass die nach einer Dehnung verbleibende nichtelastische Längenzunahme gering ist. So ist gemäß einer bevorzugten Ausführung der Erfindung vorgesehen, dass nach einer ersten Dehnung der elastischen Folie um 200 % und einer nachfolgenden Entspannung die nichtelastische Längenzunahme geringer als 3 % ist. Auch bei einer mehrfachen, starken Dehnung bleiben die elastischen Eigenschaften weitgehend uneingeschränkt erhalten.

Gegenstand der Erfindung ist auch ein Verfahren zur Herstellung der beschriebenen Folie nach Anspruch 7. Bevorzugte Ausgestaltungen des Verfahrens werden in den Ansprüchen 8 bis 10 beschrieben.

Erfindungsgemäß wird eine Schicht aus der zuvor erläuterten elastomeren Polymerzusammensetzung als Monofolie extrudiert oder als mehrlagige Folie mit mindestens einer weiteren Schicht coextrudiert. Die extrudierte Folie wird anschließend einer Elektronenstrahlvorrichtung zugeführt, in der die aus der elastomeren Polymerzusammensetzung bestehende Schicht durch Bestrahlung mit energiereichen Elektronen vernetzt wird. Durch Nachschalten einer Elektronenstrahlvorrichtung können herkömmliche Extrusionsanlagen für das erfindungsgemäße Verfahren genutzt werden. Im Gegensatz zu einem Verfahren, bei dem gemäß dem Stand der Technik eine Vernetzung durch UV-Strahlen erfolgt, entfällt die Beimischung eines Photoinitiators. Die Vernetzungsdichte kann durch die elastomere Polymerzusammensetzung, insbesondere durch die erfindungsgemäße Zugabe eines reaktiven Weichmachers, beeinflusst werden. Ferner ist die Vernetzungsdichte abhängig durch die von der Elektronenstrahlvorrichtung zugeführte Energiedosis D. Um eine ausreichend hohe Vernetzungsdichte zu erzeugen, ist eine Energiedosis von mehr als 15 kGy (Kilogray), vorzugsweise von mehr als 40 kGy vorgesehen. Die Energiedosis ergibt sich aus dem Quotient aus absorbierter Strahlungsenergie und Masse des Folienmaterials. Ab einem gewissen Wert D ist üblicherweise eine Sättigung der Vernetzungsdichte zu beobachten. Des Weiteren besteht die Gefahr, dass bei einer zu starken Bestrahlung eine unerwünschte Fragmentierung der Polymerketten erfolgt. Zweckmäßigerweise wird deshalb abhängig von Aufbau und Dicke der Folie eine Energiedosis D gewählt, die maximal etwa 100 kGy beträgt.

Die Elektronenstrahlspannung bestimmt die Elektroneneindringtiefe und hat einen Einfluss auf die Elektronenpenetrationskurve. Bei niedrigen Spannungen dringen die Sekundärelektronen nur in die obersten Substratschichten ein. Bei zu hoher Spannung kann es sein, dass die in die obersten Schichten eintreffenden Elektronen zu schnell sind und somit keine Vernetzungsreaktion auslösen. Um ein gleichmäßiges Vernetzungsverhalten über den Substratquerschnitt zu erzielen, sollte die lonisation der obersten und untersten Schichten möglichst ausgeglichen sein. Die Eindringtiefe der Elektronenstrahlen wird durch Wahl der Beschleunigungsspannung vorzugsweise so festgelegt, dass in der obersten und untersten Folienschicht eine lonisation von mindestens 90 % vorliegt.

Vor und nach einer Elektronenstrahlvernetzung ist der Gel-Gehalt von Folien untersucht worden. Während unbestrahlte Folien einen Gel-Gehalt von 30 bis 37 % aufwiesen, wurde an den mit einer Dosis von 100 kGy bestrahlten Folien ein Gel-Gehalt von 67 bis 74 % gemessen (nach ISO 579).

Bei der Bestrahlung mit Elektronen wird im Gegensatz zu einer Bestrahlung mit UV-Licht das behandelte Material üblicherweise nur leicht erwärmt. Dennoch kann im Rahmen der Erfindung vorgesehen sein, dass die extrudierte Folie in der Elektronenstrahlvorrichtung über eine Kühlwalze geführt wird.

### Beispiele

1. Es wurden Coextrusionsfolien hergestellt, die eine elastomere Kernschicht sowie 4 µm dicke Außenschichten aus Polypropylen aufwiesen und durch Elektronenstrahlen vernetzt wurden. Es wurden elastomere Polymerzusammensetzungen mit und ohne Zusatz eines reaktiven Weichmachers untersucht. Der reaktive Weichmacher wurde nach Art und Menge variiert. Folgende Variationen wurden vorgenommen:
Folie 1: Foliendicke 65 µm
   - elastomere Polymerzusammensetzung ohne Zusatz eines reaktiven Weichmachers
Folie 2: Foliendicke 65 µm
   - elastomere Polymerzusammensetzung der Folie 1 mit einem Zusatz von 2,5 Gew.-% methacrylat-terminiertem Butadien (Molmasse 4450 g/mol; Viskosität 100.000 mPas (27° C))
Folie 3: Foliendicke 40 µm
   - elastomere Polymerzusammensetzung ohne Zusatz eines reaktiven Weichmachers
Folie 4: Foliendicke 40 µm
   - elastomere Polymerzusammensetzung der Folie 3 mit einem Zusatz von 5 Gew.-% multifunktionalem Polyester-Acrylat (Viskosität 300 bis 900 mPas (25° C))
Folie 5: Foliendicke 40 µm
   - elastomere Polymerzusammensetzung der Folie 3 mit einem Zusatz von 5 Gew.-% Acrylat-Polybutadien (Viskosität 80.000 mPas,(25 °C))
Die nachfolgende Elektronenstrahlvernetzung erfolgte mit einer Strahlungsintensität von 100 kGy. Zum Vergleich wurden zwei unvernetzte Folien mit den Folienrezepturen 1 und 3 hergestellt.
Die vernetzten und unvernetzten Folien wurden mit einem Dehnungswert von 500 % vorgedehnt. An den vorgedehnten Folien wurden Dehnungsmessungen durchgeführt. Bei den Dehnungsmessungen wurde die Folie nacheinander um 50 %, 100 % und 200 % gedehnt und die Dehnungskraft gemessen. Danach wurde die Folie auf einen Dehnungswert von 30 % entspannt und wiederum die Dehnungskraft gemessen. Nach vollständiger Entspannung wurde die bleibende Restdehnung gemessen. Die Messergebnisse sind in der nachfolgenden Tabelle wiedergegeben.

| | | **Folie 1** | | **Folie 2** | **Folie 3** | | **Folie 4** | **Folie 5** |
|---|---|---|---|---|---|---|---|---|
| Bestrahlungsintensität | [kGy] | 0 | 100 | 100 | 0 | 100 | 100 | 100 |
| Dehnung 50 % | [N/inch] | 1,2 | 1,43 | 1,59 | 0,83 | 0,94 | 1,01 | 0,98 |
| Dehnung 100 % | [N/inch] | 1,51 | 1,84 | 2,08 | 1,06 | 1,21 | 1,34 | 1,26 |
| Dehnung 200 % | [N/inch] | 1,98 | 2,67 | 3,12 | 1,53 | 1,95 | 2,16 | 2,09 |
| Entlastung auf 30 % Dehnung | [N/inch] | 0,34 | 0,39 | 0,44 | 0,16 | 0,19 | 0,2 | 0,21 |
| bleibende Dehnung | [%] | 2,3 | 2,7 | 2 | 2,1 | 1,9 | 2,9 | 2,44 |

Anhand der ermittelten Messwerte von unbestrahlten und bestrahlten Folienmustern bleibt festzuhalten, dass durch die Zugabe von reaktiven Weichmachern die Festigkeitswerte der vernetzten Folien zum Teil deutlich verbessert werden können.
2. In einem weiteren Versuch wurde der Einfluss der Elektronenstrahlspannung auf die Elektroneneindringtiefe bei der Elektronenstrahlvernetzung untersucht. Zugrunde gelegt wurde ein 65 µm dickes Folienmuster. Bei einer Elektronenstrahlspannung von 170 KV wurde in der obersten Folienschicht eine Ionisation von 99 % und in der untersten Schicht eine lonisation von 92 % festgestellt. Bei einer Einstellung von 140 KV verschiebt sich dieses lonisationsverhalten. Die oberste Folienschicht weist dann einen Wert von 99 % und die unterste Schicht einen Wert von 66 % auf. Bei dieser Einstellung wird eine gleichmäßige Durchvernetzung nicht gewährleistet.

## Patentansprüche

1. Elastische Folie, insbesondere für Hygieneartikel, mit mindestens einer durch Extrusion einer elastomeren Polymerzusammensetzung hergestellten und anschließend vernetzten elastischen Schicht,
wobei die elastomere Polymerzusammensetzung eine Mischung aus 40 bis 90 Gew.-Anteilen eines Styrol-Block-Copolymers, 5 bis 50 Gew.-Anteile eines Weichmacheröls und bis zu 10 Gew.-Anteile eines thermoplastischen Polymers enthält und
wobei die durch Extrusion der elastomeren Polymerzusammensetzung gebildete Schicht durch Behandlung mit Elektronenstrahlen vernetzt ist,
**dadurch gekennzeichnet, dass** die elastomere Polymerzusammensetzung zusätzlich 2 bis 20 Gew.-Anteile eines reaktiven Weichmachers enthält, der aus einem methacrylatterminierten Butadien, Methacrylat-Butadien, einem multifunktionellen Polyester-Acrylat oder Acrylat-Polybutadien besteht, eine Molmasse von weniger als 10.000 kg/kmol aufweist und mit Weichsegmenten des Styrol-Block-Copolymers kompatibel ist.

2. Elastische Folie nach Anspruch 1, **dadurch gekennzeichnet, dass** der reaktive Weichmacher eine Viskosität von weniger als 10⁵ mPas, gemessen mit einem Brookfield Viskosimeter bei 25° C aufweist.

3. Elastische Folie nach Anspruch 1 oder 2, **dadurch gekennzeichnet, dass** der Weichmacher ein niedrigviskoses Oligomer ist.

4. Elastische Folie nach einem der Ansprüche 1 bis 3, **dadurch gekennzeichnet, dass** der in der elastomeren Polymerzusammensetzung enthaltene Anteil eines thermoplastischen Polymers aus der Gruppe der Polystyrole, Ethylen-Vinylacetat-Copolymere oder Polyolefine ausgewählt ist.

5. Elastische Folie nach einem der Ansprüche 1 bis 4, **dadurch gekennzeichnet, dass** die Folie mindestens eine mit der elastomeren Polymerzusammensetzung coextrudierte Außenschicht aus einem Polymer aus der Gruppe Polyethylen, Polyethylen-Copolymer, Propylen, Propylen-Copolymer oder einer Mischung dieser Polymere aufweist.

6. Elastische Folie nach einem der Ansprüche 1 bis 5, **dadurch gekennzeichnet, dass** nach einer ersten Dehnung der elastischen Folie um 200 % und einer nachfolgenden Entspannung die bleibende nichtelastische Längenzunahme geringer als 3 % ist.

7. Verfahren zur Herstellung einer elastischen Folie nach einem der Ansprüche 1 bis 6,
wobei eine erste Schicht aus einer elastomeren Polymerzusammensetzung, die 40 bis 90 Gew.-Anteilen eines Styrol-Block-Copolymers, 5 bis 50 Gew.-Anteile eines Weichmacheröls und bis zu 10 Gew.-Anteile eines thermoplastischen Polymers enthält, als Monofolie extrudiert oder als mehrlagige Folie mit mindestens einer weiteren Schicht coextudiert wird und
wobei die extrudierte Folie einer Elektronenstrahlvorrichtung zugeführt wird, in der die aus der elastomeren Polymerzusammensetzung bestehende Schicht durch Bestrahlung mit energiereichen Elektronen vernetzt wird,
**dadurch gekennzeichnet, dass** der elastomeren Polymerzusammensetzung 2 bis 20 Gew.-Anteile eines reaktiven Weichmachers zugegeben werden, der aus einem methacrylatterminierten Butadien, Methacrylat-Butadien, einem multifunktionellen Polyester-Acrylat oder Acrylat-Polybutadien besteht, eine Molmasse von weniger als 10.000 kg/kmol aufweist und mit Weichsegmenten des Styrol-Block-Copolymers kompatibel ist.

8. Verfahren nach Anspruch 7, **dadurch gekennzeichnet, dass** die Folie in der Elektronenstrahlvorrichtung eine Energiedosis D von mehr als 15 kGy (Kilogray), vorzugsweise mehr als 40 kGy, ausgesetzt wird.

9. Verfahren nach Anspruch 7 oder 8, **dadurch gekennzeichnet, dass** die Eindringtiefe der Elektronenstrahlen durch Wahl der Beschleunigungsspannung so festgelegt wird, dass in der obersten und untersten Folienschicht eine Ionisation von mindestens 90 % vorliegt.

10. Verfahren nach einem der Ansprüche 7 bis 9, **dadurch gekennzeichnet, dass** die extrudierte Folie in der Elektronenstrahlvorrichtung über eine Kühlwalze geführt wird.

## Claims

1. An elastic film, particularly for sanitary products, with at least one elastic layer produced by extrusion of an elastomeric polymer composition and then cross-linked,
wherein the elastomeric polymer composition contains 40 to 90 % by weight of a styrene block copolymer, 5 to 50 % by weight of a softener oil and up to 10 % by weight of a thermoplastic polymer and
wherein the layer formed by extrusion of the elastomeric polymer composition is cross-linked by electron beam processing
**characterised in that** the elastomeric polymer composition also contains 2 to 20 % by weight of a reactive softener, which comprises a methyl acrylate terminated butadiene, methyl acrylate butadiene, a multifunctional polyester acrylate or acrylate polybutadiene and has a molar mass of under 10,000 kg/kmol, and is compatible with soft segments of the styrene block copolymer.

2. The elastic film according to claim 1, **characterised in that** the reactive softener exhibits a viscosity of less than 10⁵ mPas, measured using a Brookfield viscosimeter at 25 °C.

3. The elastic film according to claim 1 or 2, **characterised in that** the softener is a low-viscosity oligomer.

4. The elastic film according to one of the claims 1 to 3, **characterised in that** the proportion of a thermoplastic polymer contained in the elastomeric polymer composition is chosen from the group of polystyrenes, ethylene vinyl acetate copolymers or polyolefins.

5. The elastic film according to one of the claims 1 to 4, **characterised in that** the film exhibits at least one outer layer of a polymer from the group polyethylene, polyethylene copolymer, polypropylene, polypropylene copolymer or a mixture of these polymers coextruded with the elastomeric polymer composition.

6. The elastic film according to one of the claims 1 to 5, **characterised in that** after a first stretching of the elastic film by 200 % and subsequent relaxation, the permanent non-elastic increase in length is less than 3 %.

7. A method for producing an elastic film according to one of the claims 1 to 6,
wherein a first layer of an elastomeric polymer composition, which contains 40 to 90 % by weight of a styrene block copolymer, 5 to 50 % by weight of a softener oil and up to 10 % by weight of a thermoplastic polymer, is extruded as a monofilm or coextruded as a multi-layer film with at least one further layer and
wherein the extruded film is fed to an electron beam device, in which the layer made from the elastomeric polymer composition is cross-linked by irradiation with energy-rich electrons,
**characterised in that** 2 to 20% by weight of a reactive softener, which comprises a methyl acrylate terminated butadiene, methyl acrylate butadiene, a multifunctional polyester acrylate or acrylate polybutadiene and has a molar mass of under 10,000 kg/kmol, and is compatible with soft segments of the styrene block copolymer, is added to the elastomeric polymer composition.

8. The method according to claim 7, **characterised in that** the film is exposed to an absorbed dose D of over 15 kGy (kilogray), preferably of over 40 kGy, in the electron beam device.

9. The method according to claim 7 or 8, **characterised in that** the penetration depth of the electron beams is defined by the choice of acceleration voltage in such a way that ionisation of at least 90 % exists in the uppermost and lowermost film layers.

10. The method according to one of the claims 7 to 9, **characterised in that** the extruded film is conveyed via a cooling roller in the electron beam device.

## Revendications

1. Film élastique, notamment pour des produits d'hygiène, avec au moins une couche élastique fabriquée par extrusion d'une composition polymère élastomère, puis réticulée,
la composition polymère élastomère contenant un mélange de 40 à 90 parts en poids d'un copolymère bloc de styrène, de 5 à 50 parts en poids d'une huile plastifiante et de jusqu'à 10 parts en poids d'un polymère thermoplastique et
la couche créée par extrusion de la composition polymère élastomère étant réticulée par traitement aux faisceaux électroniques,
**caractérisé en ce que** la composition polymère élastomère contient en supplément de 2 à 20 parts en poids d'un plastifiant réactif, qui est constitué d'un butadiène terminé aux méthacrylates, d'un butadiène de méthacrylate, d'un acrylate de polyester multifonctionnel ou d'un polybutadiène d'acrylate, présente une masse molaire de moins de 10.000 kg/kmoles et est compatible avec des segments souples du copolymère bloc de styrène.

2. Film élastique selon la revendication 1, **caractérisé en ce que** le plastifiant réactif présente une viscosité de moins de 10⁵ mPas, mesurée à l'aide d'un viscosimètre Brookfield.

3. Film élastique selon la revendication 1 ou 2, **caractérisé en ce que** le plastifiant est un oligomère à faible viscosité.

4. Film élastique selon l'une quelconque des revendications 1 à 3, **caractérisé en ce que** la part en un polymère thermoplastique contenue dans la composition polymère élastomère est choisie dans le groupe des polystyrènes, des copolymères d'éthylène-acétate de vinyle ou des polyoléfines.

5. Film élastique selon l'une quelconque des revendications 1 à 4, **caractérisé en ce que** le film présente au moins une couche extérieure co-extrudée avec la composition polymère élastomère en un polymère faisant partie du groupe des polyéthylènes, des copolymères de polyéthylène, du propylène, des copolymères de propylène ou d'un mélange desdits polymères.

6. Film élastique selon l'une quelconque des revendications 1 à 5, **caractérisé en ce qu'**après un premier étirement du film élastique de 200 % et une détente consécutive, l'augmentation de longueur non élastique résiduelle est inférieure à3%.

7. Procédé de fabrication d'un film élastique selon l'une quelconque des revendications 1 à 6, dans lequel
on extrude une première couche d'une composition élastomère contenant de 40 à 90 parts en poids d'un copolymère bloc de styrène, de 5 à 50 parts en poids d'une huile plastifiante et de jusqu'à 10 parts en poids d'un polymère thermoplastique en un monofilm ou on la co-extrude en un film multicouches avec au moins une couche supplémentaire et
on amène le film extrudé dans un dispositif à faisceaux électroniques, dans lequel on réticule la couche consistant dans la composition polymère élastomère par rayonnement aux électrons riches en énergie,
**caractérisé en ce qu'**on ajoute à la composition polymère élastomère de 2 à 20 parts en poids d'un plastifiant réactif, qui est constitué d'un butadiène terminé aux méthacrylates, d'un butadiène de méthacrylate, d'un acrylate de polyester multifonctionnel ou d'un polybutadiène d'acrylate, présente une masse molaire de moins de 10.000 kg/kmoles et est compatible avec des segments souples du copolymère bloc de styrène.

8. Procédé selon la revendication 7, **caractérisé en ce que** dans le dispositif à faisceaux électroniques, on expose le film à une dose d'énergie D de plus de 15 kGy (kilogray), de préférence de plus de 40 kGy.

9. Procédé selon la revendication 7 ou 8, **caractérisé en ce qu'**on fixe la profondeur de pénétration des faisceaux électroniques par choix de la tension d'accélération, de telle sorte que dans la couche supérieure et inférieure de film se présente une ionisation d'au moins 90 %.

10. Procédé selon l'une quelconque des revendications 7 à 9, **caractérisé en ce que** dans le dispositif à faisceaux électroniques, on fait passer le film extrudé par dessus un cylindre de refroidissement.
